# EUROPÄISCHE PATENTSCHRIFT

(11) **EP 2 280 326 B1**
(45) Veröffentlichungstag und Bekanntmachung des Hinweises auf die Patenterteilung: **16.04.2014**
(21) Anmeldenummer: 09008989.7
(22) Anmeldetag: 09.07.2009
(51) Int. Cl.: G05B 19/05

(54) **Spannungsversorgungsmodul für ein Automatisierungssystem**
Power supply module for an automation system
Module d'alimentation en tension pour un système d'automatisation

(43) Veröffentlichungstag der Anmeldung: 02.02.2011
(73) Patentinhaber: Siemens Aktiengesellschaft, 80333 München (DE)
(72) Erfinder: Dausend, Stefan, 91126 Schwabach (DE); Maier, Martin, 73760 Ostfildern (DE); Schaan, Stefan, 90592 Schwarzenbruck-Pfeifferhütte (DE)

(56) Entgegenhaltungen:
- EP-A- 1 857 900
- EP-A- 2 048 555
- WO-A-2005/057306
- DE-A1-102007 047 309

## Beschreibung

Die vorliegende Erfindung betrifft ein Spannungsversorgungsmodul für ein moduleres Automatisierungssystem oder ein Peripheriesystem eines Automatisierungssystems, wobei das Spannungsversorgungsmodul zur Versorgung mindestens eines Peripheriemoduls mit einer Lastspannung ausgebildet und eingerichtet ist, und das mindestens ein Peripheriemodul zum Anschluss mindestens eines externen Geräts vorgesehen und eingerichtet ist.

Derartige Spannungsversorgungsmodule sind aus dem Stand der Technik bekannt. So offenbart beispielsweise die europäische Offenlegungsschrift EP 2009522 A1 eine Spannungsversorgungseinheit zur Spannungsversorgung mehrerer Peripheriebaugruppen, die zu einer Lastgruppe zusammengefasst sind. An die Peripheriemodule sind über entsprechende Prozessklemmen dann die eigentlichen Verbraucher des Automatisierungssystems angeschlossen. Die Spannungsversorgung einer Lastgruppe erfolgt über sogenannte Potentialschienen, welche von der Spannungsversorgungseinheit mit Spannung versorgt werden und von welchen die Peripheriemodule die Spannung abnehmen. Durch Abschalten der Spannung durch die Spannungsversorgungseinheit wird die Potentialschiene spannungslos und auf diese Weise auch die Ausgangsspannungen der Peripheriemodule. Auf diese Weise können beispielsweise in einem Fehlerfall durch Abschaltung der Spannungsversorgungseinheit schnell und wirksam Schäden an Personen und Maschinen verhindert werden.

Weiterhin offenbart die europäische Offenlegungsschrift EP 2 048 555 A1 ein Automatisierungsgerät mit einer CPU-Einheit und zwei redundanten Analogausgabeeinheiten, wobei die CPU-Baugruppe jeder Analogausgangseinheit ein Prozess-Ausgangssignal übermittelt, aus welchem diese jeweils einen entsprechenden Strom erzeugt und diesen überwacht.

Die WO 2005/057306 A1 offenbart eine Peripherieeinheit für ein redundantes Steuersystem, wobei der Peripherieeinheit von einem Steuerrechner Steuerdaten über eine Soll-Ausgangsspannung übermittelt werden. Weiterhin werden Maßnahmen offenbart, mittel welcher ein Kurzschluss am Peripherieeinheits-Ausgang erkannt werden können.

Die EP 1 857 900 A2 offenbart eine sicherheitsgerichtete Steuereinheit mit einer Mehrzahl von angeschlossenen Eingabe-Ausgabe-Einheiten. Dabei ist in den Eingabe-Ausgabe-Einheiten eine Abschalt-Schaltung für die zugeführte Spannung vorgesehen.

Die Deutsche Offenlegungsschrift DE 10 2007 047 309 A1 offenbart ein Messgerät, bei welchem die Energieversorgung des Messgeräts und die Signalisierung der Messsignale über die gleichen zwei Leitungen vorgenommen wird.

Es ist ein Nachteil des genannten Standes der Technik, dass bei Querschlüssen innerhalb der Verdrahtung von Peripheriemodulen mit den Verbrauchern es vorkommen kann, dass eine wie vorstehend genannt abgeschaltete Potentialschiene über einen solchen Querschluss mit einem Potential-führenden Leiter trotz Abschaltung mit einer Spannung belegt sein kann. Auf diese Weise liegt dann trotz Abschaltung der Potentialschiene durch die Spannungsversorgungseinheit eine Spannung an der Potentialschiene an. Damit können dann möglicherweise trotz Abschaltung entsprechend angeschlossene Verbraucher weiterhin mit Spannung versorgt werden.

Es ist daher eine Aufgabe der vorliegenden Erfindung, die Sicherheit, insbesondere die Abschaltsicherheit, bei derartigen Lastbaugruppen zu erhöhen.

Diese Aufgabe wird gelöst von einem Spannungsversorgungsmodul gemäß Anspruch 1.

Ein Automatisierungssystem gemäß der nachfolgenden Beschreibung ist dabei erfindungsgemäß als ein modulares Automatisierungssystem oder ein modulares Peripheriesystem für ein Automatisierungssystem ausgebildet. Weiterhin ist eine Spannungsversorgungseinheit, eine Peripherieeinheit bzw. eine Steuerungseinheit gemäß der nachfolgenden Beschreibung erfindungsgemäß als ein Spannungsversorgungsmodul, ein Peripheriemodul bzw. ein Steuerungsmodul für das modulare Automatisierungssystem oder für das modulare Peripheriesystem ausgebildet und eingerichtet.

Durch die Möglichkeit des Vergleichs einer an der Peripherieeinheit anliegenden Soll-Lastspannung mit der tatsächlich daran anliegenden Ist-Lastspannung hat die Spannungsversorgungseinheit die Möglichkeit, zu kontrollieren, ob beispielsweise eine Abschaltung der Lastspannung zu der Peripherieeinheit auch tatsächlich erfolgt ist bzw. ob eine anzulegende Spannung auch tatsächlich so angelegt ist. Damit lassen sich beispielsweise auftretende Fehler, zum Beispiel durch Querschlüsse bei der Verdrahtung mit Verbrauchern oder ähnlichen Anschlüssen einfacher entdecken. Durch die Übertragung einer entsprechenden Information ist es dann beispielsweise dem Automatisierungssystem möglich, auf einen solchen Fehler entsprechend zu reagieren und so die Sicherheit des Automatisierungssystems in Bezug auf Personen- und/oder Sachschäden zu erhöhen.

Ein Maß für eine Diskrepanz zwischen Soll- und Ist-Lastspannung kann beispielsweise eine Differenz, der Betrag einer Differenz, ein Quotient oder der Betrag eines Quotienten zwischen der Soll- und Ist-Lastspannung sein. Weiterhin kann auch jede z.B. mathematische Operation, Formel oder Rechenvorschrift, deren Ergebnis ein Maß für einen Unterschied zwischen Soll- und Ist-Lastspannung ist, eine Diskrepanz im Rahmen der vorliegenden Erfindung sein.

Das Spannungsversorgungsmodul kann beispielsweise als eine beliebige Spannungs- und/oder Stromversorgungsmodul ausgebildet sein. Sie kann beispielsweise als getrenntes Modul ausgebildet oder auch in das Automatisierungssystem bzw. Peripheriesystem integriert sein. So kann die Spannungsversorgungsmodul beispielsweise als so genanntes Power-Modul zur Integration in eine Baugruppeneinheit einer speicherprogrammmierbaren Steuerung oder eines Peripheriesystems für eine speicherprogrammierbare Steuerung ausgebildet sein.

Die Spannungsversorgung der mindestens einen Peripherieeinheit kann beispielsweise über eine oder mehrere Potentialschienen oder eine oder mehrere Kabelverbindungen oder eine Kombination davon erfolgen. Bei der Verwendung einer oder mehrerer Potentialschienen kann diese beispielsweise von der Spannungsversorgungseinheit mit Spannung versorgt werden, wobei die mindestens eine Peripherieeinheit die benötigte Lastspannung für die externen Geräte von der Potentialschiene abgreift. Dabei kann die Lastspannung beispielsweise von einer externen Spannungsquelle an die Spannungsversorgungseinheit angelegt und von dieser quasi an die Peripherieeinheiten weitergeleitet werden. Weiterhin kann die Spannungsversorgungseinheit aber auch eine eigene Transformations-Einheit aufweisen und eine extern zugeführte Spannung wandeln.

Die von der Spannungsversorgungseinheit mit Spannung versorgten ein oder mehreren Peripherieeinheiten können als Lastgruppe ausgebildet sein. Damit sind diese ein oder mehreren Peripherieeinheiten zu einer geschlossenen Modulgruppe zusammengefasst, die von der Spannungsversorgungseinheit mit Spannung versorgt werden. Eine Spannungsänderung bzw. ein Abschalten der Spannung durch die Spannungsversorgungseinheit wirkt sich dann auf die komplette Lastgruppe aus.

Unter einer Lastspannung wird z.B. eine solche Spannung verstanden, die zumindest unter anderem zur Ansteuerung mindestens eines an die mindestens eine Peripherieeinheit angeschlossenen Verbrauchers mit einer Schalt-, Signal-, oder Betriebsspannung verwendet wird. Solche Verbraucher können beispielsweise Sensoren oder Aktoren sein, die Teil eines vom Automatisierungssystem gesteuerten Geräts oder einer entsprechend gesteuerten Anlage sein können.

Eine Peripherieeinheit kann beispielsweise als Ein- und/oder Ausgabevorrichtung und/oder Ein- und/oder Ausgabemodul ausgebildet sein. Ein solches kann zur Eingabe von von extern gelieferten elektronischen Signalen bzw. zur Ausgabe von elektrischen oder elektronischen Signalen an entsprechende Verbraucher ausgebildet sein. Solche Peripherieeinheiten können beispielsweise nur zur Ausgabe von Signalen oder nur zur Eingabe von Signalen oder auch sowohl zur Ein- als auch zur Ausgabe von Signalen ausgebildet sein. Eine Peripherieeinheit kann beispielsweise als ein Modul für eine speicherprogrammierbare Steuerung beispielsweise zur Integration in eine entsprechende Automatisierungsmodulgruppe oder eine entsprechende Modulgruppe eines zu einem Automatisierungssystem gehörenden Peripheriesystems ausgebildet sein.

Die Spannungsversorgungseinheit und eine oder mehrere bzw. alle der mindestens einen Peripherieeinheit können beispielsweise auch baulich zu einem Modul integriert sein.

Unter der Soll-Lastspannung wird Spannung verstanden, mit welcher, z.B. durch eine Automatisierungseirichtung oder einen Bediener, geplant ist, die mindestens eine Peripherieeinheit durch die Spannungsversorgungseinheit zu versorgen. Dabei kann die Soll-Lastspannung beispielsweise durch eine von extern an die Spannungsversorgungseinheit angelegte Spannungsquelle vorgegeben sein oder auch durch die Spannungsversorgungseinheit selbst. Dabei kann es sich beispielsweise um einen fest eingestellten Wert handeln, einen an der Spannungsversorgungseinheit manuell einstellbaren Wert und/oder auch um einen beispielsweise durch das Automatisierungssystem oder das Peripheriesystem vorgegebenen und an die Spannungsversorgungseinheit ausgegebenen Wert handeln.

Weiterhin kann die Spannungsversorgungseinheit beispielsweise auch eine Schalteinheit umfassen, mit welcher eine von der Spannungsversorgungseinheit an die mindestens eine Peripherieeinheit ausgegebene Spannung an- und/oder abschaltbar ist. Weiterhin kann eine Abschaltung der an die mindestens eine Peripherieeinheit ausgegebenen Spannung z.B. auch durch Einstellung eines Spannungswerts Null erfolgen.

Unter der Ist-Lastspannung wird jene Spannung verstanden, welche tatsächlich an der mindestens einen Peripherieeinheit anliegt. Diese kann beispielsweise am Lastspannungseingang einer Peripherieeinheit gemessen werden und/oder auch am Lastspannungsausgang der Spannungsversorgungseinheit.

Zusätzlich zur Lastspannung kann im Automatisierungssystem bzw. in deren Komponenten (z. B. Peripherieeinheiten, Spannungsversorgungseinheiten und/oder Steuerungseinheiten) eine zusätzliche Spannungs- bzw. Stromversorgung für die Steuerungskomponenten der genannten Einheiten vorgesehen sein. Diese Steuerungsspannung kann beispielsweise über eine getrennte, unabhängige Spannungsversorgung erfolgen. In diesem Fall kann beispielsweise in einem modularen Automatisierungssystem oder Peripheriesystem ein Bussystem zur Kommunikation verschiedener Baugruppen vorgesehen sein, über welches auch eine Versorgungsspannung für die Steuereinheiten oder Teile der Steuereinheiten der Einzeleinheiten geliefert wird. Ein solches Bussystem kann beispielsweise als Rückwandbus für eine modulare speicherprogrammierbare Steuerung oder ein entsprechendes Peripheriesystem zu einer speicherprogrammierbaren Steuerung ausgestaltet sein. Die Spannungsversorgung der Steuerungsteile der entsprechenden Baugruppen für ein Automatisierungssystem oder Peripheriesystem kann aber auch über die Spannungsversorgungseinheit gemäß der vorliegenden Beschreibung erfolgen.

Die Lastspannungs-Zustands-Information kann beispielsweise als so genannter "Diskrepanz-Alarm" ausgebildet sein oder einen solchen umfassen. Ein solcher "Diskrepanz-Alarm" kann dabei eine Information der Spannungsversorgungseinheit enthalten, dass die Soll-Lastspannung und die Ist-Lastspannung sich unterscheiden, beispielsweise um mindestens einen bestimmten vorgegebenen oder vorgebbaren Wert unterscheiden. Weiterhin kann die Lastspannungs-Zustands-Information beispielsweise auch ein Diskrepanzwert, wie z.B. ein Differenzwert, der Soll-Lastspannung und der Ist-Lastspannung bzw. ein dieser Diskrepanz und/oder Differenz zugeordneter Betrag sein.

Weiterhin kann die Lastspannungs-Zustands-Information auch eine Information über ein oder mehrere Größenordnungsbereiche des Betrages der Differenz von Soll- und Ist-Lastspannung umfassen. Dies kann beispielsweise eine Information über eine unkritische Differenz sein, wenn der Betrag der Differenz unterhalb eines gewissen vorgegebenen oder vorgebbaren Werts liegt und/oder eine Information über einen kritischen oder ggf. auch dramatischen Betrag der Differenz, wenn dieser Betrag in einem entsprechenden Größenordnungsbereich oder oberhalb eines entsprechenden Größenwerts liegt. Weiterhin kann eine Lastspannungs-Zustands-Information auch als eine Meldung ausgebildet sein, die dann ausgelöst wird, wenn der Differenzbetrag von Soll- und Ist-Lastspannung einen bestimmten vorgebbaren oder vorgegebenen Grenzwert, der auch Null sein kann, übersteigt.

Die Steuerungseinheit ist als ein Steuerungsmodul für das Automatisierungssystem oder das Peripheriesystem ausgebildet. Dabei kann es sich beispielsweise um eine baulich getrennte Einheit zur Kombination mit einem System für eine speicherprogrammierbare Steuerung oder ein Peripheriesystem für eine speicherprogrammierbare Steuerung handeln. Die Steuerungseinheit kann beispielsweise als eine Zentraleinheit für ein solches System oder beispielsweise auch eine Kopfbaugruppe oder ein Kommunikationsmodul für ein Peripheriesystem ausgebildet sein. Eine entsprechende Steuerungseinheit kann auch beispielsweise mit anderen Komponenten des Automatisierungssystems oder des Peripheriesystems baulich verbunden bzw. mit einem solchen integriert sein.

Die Spannungsversorgungseinheit ist als spannungsversorgungsmodul ausgebildet und kann weiterhin derart ausgebildet und eingerichtet sein, dass die Lastspannungszustands-Information nur dann übertragen wird, wenn der Betrag der Diskrepanz zwischen Soll- und Ist-Lastspannung einen vorgegebenen und vorgebbaren Grenzwert übersteigt.

Mit dieser Ausgestaltung lässt sich beispielsweise der Kommunikationsaufwand innerhalb eines Automatisierungssystems oder Peripheriesystem reduzieren, indem Informationen nur dann kommuniziert werden, wenn tatsächlich eine Störung oder als Störung identifizierter Zustand auftritt. Dabei kann der vorgegebene oder vorgebbare Grenzwert auch den Betrag Null aufweisen, was bedeutet, dass eine entsprechende Lastspannungszustands-Information dann ausgegeben wird, wenn Soll- und Ist-Lastspannung nicht gleich sind.

Die vorstehend genannte Aufgabe wird auch gelöst von einer als Steuerungsmodul ausgebildeten Steuerungseinheit für ein

Automatisierungssystem oder ein modulares Peripheriesystem eines Automatisierungssystems, wobei die Steuerungseinheit
- zum Empfang und/oder der Verarbeitung der Lastspannungszustands-Information über den Rückwandbus und
- zur Steuerung der mindestens einen als Peripheriemodul ausgebildeten Peripherieeinheit über den Rückwandbus ausgebildet und eingerichtet ist.

Mittels einer derart ausgebildeten Steuerungseinheit lassen sich beispielsweise bei Fehlern innerhalb der Kabelverbindungen beispielsweise zu den Verbrauchern einer Lastgruppe eines Automatisierungssystems beispielsweise durch Querschlüsse auftretende Fehlspannungen erkennen und eine entsprechende Reaktion auslösen.

Die Verarbeitung der Lastspannungszustands-Information z.B. in der Steuerungseinheit kann beispielsweise zumindest unter anderem darin bestehen, dass die Steuerungseinheit eine Antwort in Form eines Steuerbefehls und/oder einer Informationsnachricht erzeugt und beispielsweise an die Quelle der Lastspannungs-Zustands-Information zurückleitet oder an eine entsprechende Einheit, beispielsweise eine oder mehrere als Peripheriemodule ausgebildeten Peripherieeinheiten oder eine Zentraleinheit, weiterleitet. Die Steuerung der mindestens einen Peripherieeinheit durch die Steuerungseinheit kann beispielsweise durch Ausgabe entsprechender Steuersignale und/oder Befehle erfolgen. So kann beispielsweise nach dem Empfang einer Lastspannungs-Züstands-Information beispielsweise eine Deaktivierung einer Peripherieeinheit durch die Steuerungseinheit erfolgen, wenn die Lastspannungs-zuständs-Information z.B. charakteristisch für einen nicht zu tolerierenden Fehler bzw. eine nicht zu tolerierende Diskrepanz zwischen Soll- und Ist-Lastspannung steht.

Eine Deaktivierung der mindestens einen als Peripheriemodul ausgebildete Peripherieeinheit durch die Steuerungseinheit kann beispielsweise dann ausgelöst werden, wenn eine Abweichung zwischen der Soll- und der Ist-Lastspannung von der

Spannungsversorgungseinheit an die Steuerungseinheit übertragen wurde, und/öder
wenn der Betrag der Diskrepanz zwischen der Soll- und der Ist-Lastspannung einen vorgegebenen oder vorgebbaren Grenzwert übersteigt, wobei dies Grenzwert auch Null sein kann.

Die Deaktivierung kann beispielsweise durch das Senden eines Abschaltbefehls von der Steuerungseinheit an die mindestens eine Peripherieeinheit oder auch einzelne davon erfolgen. Damit können beispielsweise alle Peripherieeinheiten, die von einer spannungsversorgungseinheit, beispielsweise einer solchen gemäß der vorliegenden Beschreibung, mit Spannung versorgt werden (eine so genannte Lastgruppe) deaktiviert werden. Der Abschaltbefehl kann aber auch so ausgestaltet sein, dass nur einzelne Peripherieeinheiten der entsprechenden Lastgruppe deaktiviert oder in einen Standby-Zustand gebracht werden.

Die Deaktivierung kann allgemein bedeuten, dass eine entsprechende Peripherieeinheit komplett abgeschattet wird, in einen Standby-Zustand gebracht wird oder sie zwar aktiv bleibt, aber angewiesen ist, keine Ausgangssignale an angeschlossene Geräte mehr auszugeben. Eine Deaktivierung kann auch ein beliebiger Zwischenzustand der vorstehend genannten zustände sein und/oder sich auf einzelne Ein- und/oder Ausgänge einer oder mehrerer Peripherieeinheiten beziehen. Weiterhin kann eine Deaktivierung beispielsweise auch damit erfolgen, dass die Steuerungseinheit keine Ausgabebefehle mehr an eine oder mehrere Peripherieeinheiten ausgibt.

Die vorstehende Aufgabe wird ebenfalls gelöst von einem modularen Automatisierungssystem oder einem modularen Peripheriesystem für ein Automatisierungssystem mit einem als Spannungsversorgungsmodul ausgebildeten Spannungsversorgungseinheit gemäß der vorliegenden Beschreibung, einem als Steuerungsmodul ausgebildeten Steuerungseinheit gemäß der vorliegenden Beschreibung sowie mindestens einem als Peripheriemodul ausgebildeten Peripherieeinheit, welche durch die Spannungsversorgungseinheit mit einer Lastspannung versorgt wird. Mittels eines solchen Automatisierungssystems lassen sich ebenfalls, wie vorstehend bereits beschrieben, Fehler in der Lastspannungszuführung von Peripherieeinheiten erkennen und entsprechende Reaktionen darauf auslösen und somit die Sicherheit erhöhen. Dabei können die Spannungsversorgungseinheit, die Steuerungseinheit sowie die Peripherieeinheiten gemäß der vorliegende Beschreibung ausgebildet sein.

Die Spannungsversorgungseinheit und die mindestens eine daran angeschlossene Peripherieeinheit kann beispielsweise eine Bezug auf die Lastspannung abgeschlossene Lastgruppe bilden, d. h. dass nur die mindestens eine Peripherieeinheit von der Spannungsversorgungseinheit mit Lastspannung versorgt wird.

Das Automatisierungssystem oder das Peripheriesystem können weiterhin mindestens eine Potentialschiene umfassen, insbesondere mindestens eine selbstaufbauende Potentialschiene, die zur Versorgung der mindestens einen Peripherieeinheit mit der Lastspannung durch die Spannungsversorgungseinheit ausgebildet ist. Die Potentialschiene kann als mechanisch durchgehendes, stromleitendes Element ausgebildet sein. Weiterhin kann die Potentialschiene auch selbstaufbauend ausgestaltet sein, d. h. der durchgehende Strompfad der Schiene entsteht durch die Montage mehrerer Komponenten, beispielsweise der spannungsversorgungseinheit mit der mindestens einen Peripherieeinheit, indem jede der Bauteile eine Komponente der Potentialschiene umfasst, die durch die Montage untereinander verbunden werden.

Weiterhin weist das Automatisierungssystem oder das Peripheriesystem mindestens einen Rückwandbus zur Kommunikation zwischen Spannungsversorgungsmodul, Steuerungsmodul und dem mindestens einen Peripheriemodul auf, insbesondere mindestens einen selbstaufbauenden Rückwandbus, der zur Übertragung der Informationen über eine Abweichung zwischen Soll- und Ist-Lastspannung und/oder zur Übertragung einer steuerinformation zur Deaktivierung der mindestens einen Peripherieeinheit ausgebildet ist. Die Steuerinformation kann z. B. ein Steuerbefehl oder auch eine Informationsnachricht sein.

Weiterhin kann das Automatisierungssystem oder Peripheriesystem derart ausgebildet sein, dass die Spannungsversorgungseinheit, die Steuerungseinheit und die mindestens eine Peripherieeinheit derart ausgestaltet sind, dass sie mechanisch relativ zueinander fixierbar oder fixiert sind. Weiterhin können auch die Spannungsversorgungseinheit und die mindestens eine Peripherieeinheit derart ausgestaltet sein, dass sie mechanisch relativ zueinander fixiert oder fixierbar sind. Eine derartige Fixierung kann beispielsweise durch Befestigung an einem gemeinsamen Träger und/oder gegenseitige Verrastung, Verriegelung oder Ähnliches (z. B. durch entsprechende Haken und/oder Stecker) erfolgen. Dabei kann ein Peripheriesystem beispielsweise derart ausgestaltet sein, dass es mechanisch unabhängig von einer zentralen Steuerungseinheit eines entsprechenden Automatisierungssystems ausgestaltet ist.

Die vorstehende Aufgabe wird ebenfalls gelöst von einem Verfähren zum Betrieb eines modularen Automatisierungssystems oder eines modularen Peripheriesystems gemäß der vorliegenden Beschreibung, wobei die als Spannungsversorgungsmodul ausgebildete Spannungsversorgungseinheit eine Lastspannung-Zustands-Information über den Rückwandbus zumindest an die als Steuerungsmodul ausgebildete Steuerungseinheit sendet, wenn der Betrag der Differenz zwischen der Soll- und der Ist-Lastspannung einen vorgegebenen oder vorgebbaren Grenzwert, der auch Null sein kann, übersteigt.

Dabei kann das Verfahren derart ausgestaltet sein, dass die Steuerungseinheit eine Deaktivierung der mindestens einen Peripherieeinheit auslöst, wenn die Steuerungseinheit eine Lastspannungs-Zustands-Information erhalten hat, und/oder wenn der Betrag der Diskrepanz zwischen der Soll- und der Ist-Lastspannung eignen vorgegebenen oder vorgebbaren Grenzwert übersteigt.

In Bezug auf die Deaktivierung der Peripherieeinheiten sowie die Ausgestaltung der Lastspannungs-Zustands-Informationen gelten sinngemäß die entsprechenden Erläuterungen an anderen Stellen innerhalb der vorliegenden Beschreibung.

Weitere vorteilhafte Ausgestaltungen finden sich in den Unteransprüchen.

Im Weiteren wird die Erfindung beispielhaft mit Bezug auf die beiliegende Figur näher erläutert. Es zeigt:

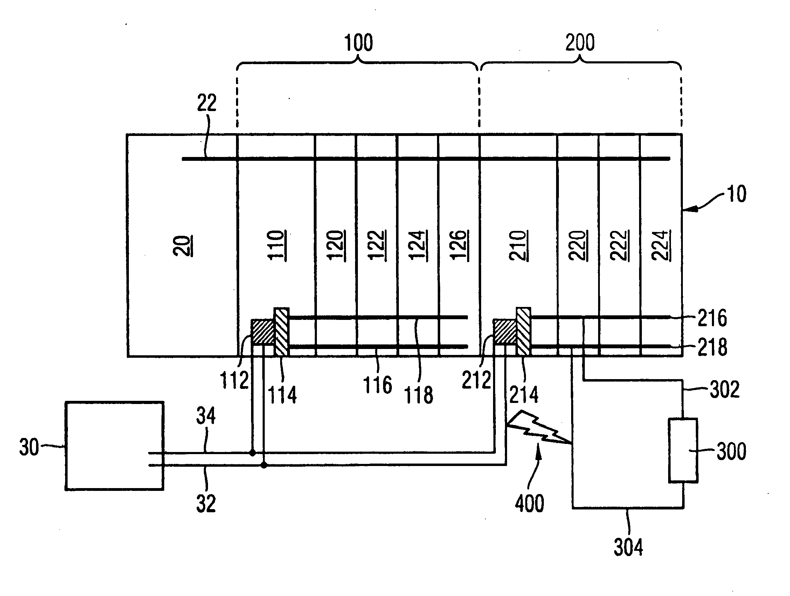

- Figur 1:: Beispiel für ein Peripheriesystem mit einer Span- nungsversorgungseinheit zum Vergleich von Soll- und Ist-Lastspannungen.

Figur 1 zeigt ein Peripheriesystem 10 mit einem Interfacemodul 20, welches als Kopfbaugruppe 20 zur Verbindung des Peripheriesystems 10 mit einem Automatisierungssystem, beispielsweise einer eine Zentraleinheit des Automatisierungssystems umfassenden Baugruppe, ausgebildet ist. Das Peripheriesystem 10 umfasst eine erste Lastgruppe 100, welche wiederum eine erste Spannungsversorgung 110 und vier Ein-/Ausgabebaugruppen 120, 122, 124, 126 umfasst. Weiterhin umfasst das Peripheriesystem 10 eine zweite Lastgruppe, welche eine zweite Spannungsversorgung 210 und drei dieser zugeordnete Ein-/Ausgabemodule 220, 222, 224 umfasst.

Die Einzelmodule 20, 110, 120, 122, 124, 126, 210, 220, 222, 224 des Peripheriesystems 10 sind an einer nicht in Figur 1 dargestellten Rückwandschiene befestigt und baulich in der Figur 1 dargestellten Anordnung aneinander fixiert. Dabei erfolgt die Kommunikation der einzelnen dargestellten Komponenten untereinander über einen Rückwandbus 22, mit welchem alle Einzelmodule des Peripheriesystems 10 verbunden sind und über welchen beispielsweise Steuerbefehle vom Interfacemodul 20 an die Ein-/Ausgabebaugruppen 120 bis 126, 220 bis 224, oder auch die Powermodule 110, 210 übertragen werden können. Auf die gleiche Weise können auch entsprechende Befehle oder Informationen unter den Einzelmodulen und insbesondere auch zurück an das Interfacemodul 20 über den Rückwandbus 22 übertragen werden. Informationen an das Interfacemodul 20 können beispielsweise direkt im Interfacemodul 20 verarbeitet werden oder an andere Komponenten, beispielsweise eine Zentraleinheit des Automatisierungssystems, übertragen werden.

Weiterhin ist eine externe Lastspannungsquelle 30 vorgesehen, mit welcher jeweils die Spannungsversorgungen 110, 210 der entsprechenden Lastgruppen 100, 200 mit einer Lastspannung über einen Phasen-Leiter 32 und einen Null-Leiter 34 versorgt werden. Die Spannungszufuhr durch die Lastspannungsquelle 30 erfolgt innerhalb der Powermodule 110, 210 an einem Spannungsverteiler 112, 212, welcher die zugeführte Spannung an jeweils eine Phasen-Potentialschiene 116, 216 und eine Null-Leiter-Potentialschiene 118, 218, überträgt. Zwischen den jeweiligen Spannungsverteilern 112, 212 und den Potentialschienen 116, 118, 216, 218, findet sich jeweils eine Sensor-Schalteinheit 114, 214.

Diese Sensor-Schalteinheit 114, 214 ist zum Einen derart ausgebildet, dass mit ihrer Hilfe die an den Potentialschienen 116, 118 216, 218 anliegenden Spannungen gemessen und mit einer vorgegebenen Spannung verglichen werden kann. Der Vergleich kann beispielsweise so erfolgen, dass eine an einer Phasen-Potentialschiene 116, 118, 216, 218 anliegende Spannung mit der entsprechenden von der Lastspannungsquelle 30 kommenden Spannung verglichen wird. Weiterhin kann die Sensor-Schalteinheit 114, 214 auch derart ausgebildet sein, dass die über den Sensor 114, 214 an den Potentialschienen 116, 118, 216, 218 gemessene Spannung mit einer gespeicherten Spannung verglichen wird, insbesondere mit einer innerhalb des jeweiligen Powermoduls 110, 210 gespeicherten Spannung verglichen wird.

In Figur 1 ist innerhalb der zweiten Lastgruppe 200 die Verbindung einer ersten Eingabe-/Ausgabebaugruppe 220 mit einem Aktor (z.B. ein Stellglied, Motor oder Schalter) dargestellt. Diese Verbindung über Zuleitungen 302 und 304 ist nur schematisch dargestellt und beispielsweise entsprechende Schalteinheiten zur tatsächlichen Steuerung des Aktors 300 durch die erste Ein-/Ausgabeeinheit 220 sind in Figur 1 nicht dargestellt.

Figur 1 zeigt symbolisch einen Kurzschluss oder Querschluss 400 (in Figur 1 als Blitz 400 dargestellt), bei welchem sich durch Isolationsfehler der Phasen-Lastspannungsleitung 32 und der zur Null-Leiterpotentialschiene 218 führenden Leitung 304 des Aktors 300 ein Kurzschluss vorliegt.

Wird nun durch den Spannungsverteiler 212 des Powermoduls 210 der zweiten Lastgruppe 200 die Lastspannung für die zweite Lastgruppe 200 durch den Schalter 214 abgeschaltet, so liegt über den Kurzschluss 400 sowie die Zuleitung 304 trotzdem die Spannung des Phasenleiters 32 an der Null-Leiterpotentialschiene 218. Auf diese Weise liegt weiterhin eine Spannung an der gesamten Null-Leiterpotentialschiene 218 und möglicherweise, bei entsprechender Schaltung der ersten Ein-/Ausgabebaugruppe 220, am Aktor 300.

Durch das Sensor-Schaltelement 240 ist nun aber die auf der Null-Leiterpotentialschiene 218 fehlerhaft vorliegende Spannung nachweisbar. Daraufhin wird im entsprechenden Powermodul 210 der zweiten Lastgruppe eine Lastspannungs-Fehlermeldung erzeugt und über den Rückwandbus 22 an das Interfacemodul übertragen. Daraufhin sendet das Interfacemodul 20 einen Abschaltbefehl an alle Eingabe-/Ausgabebaugruppen 220, 222, 224 der zweiten Lastgruppe, so dass gezielt alle Ausgänge deaktiviert werden und trotz auf der Potentialschiene 218 anliegender fehlerhafter Spannung von den entsprechenden Baugruppen 220 bis 224 keine Spannungssignale mehr ausgegeben werden.

Auf diese Weise lassen sich beispielsweise durch entsprechende Querschlüsse erzeugte Spannungsfehler und mögliche Sicherheitsrisiken durch z.B. entsprechenden Ausgabeeinheiten des Peripheriesystems 10 vermeiden.

Die vorliegende Erfindung beschreibt eine Spannungsversorgungseinheit, eine Steuerungseinheit sowie ein Automatisierungs- oder Peripheriesystem, bei welchem sich durch Vergleich einer Soll-Lastspannung mit einer Ist-Lastspannung Fehler bei beispielsweise Ausgabesignalen von Peripherieeinheiten eines Automatisierungssystems durch z.B. Leitungsfehler und/oder Querschlüsse vermieden werden können.

## Patentansprüche

1. Spannungsversorgungsmodul (110, 210) für ein modulares Automatisierungssystem oder ein modulares Peripheriesystem (10) eines Automatisierungssystems, wobei das Spannungsversorgungsmodul (110, 210) zur Versorgung mindestens eines Peripheriemoduls (120, 122, 124, 126, 220, 222, 224) mit einer Lastspannung ausgebildet und eingerichtet ist,
das mindestens eine Peripheriemodul (120, 122, 124, 126, 220, 222, 224) zum Anschluss mindestens eines externen Geräts (300) vorgesehen und eingerichtet ist, und
das modulare Automatisierungssystem oder das modulare Peripheriesystem einen Rückwandbus (22) zur Kommunikation zwischen Modulen des modularen Automatisierungssystems beziehungsweise des modularen Peripheriesystems (10) umfasst, und
das Spannungsversorgungsmodul (110, 210) zum Vergleich einer Soll-Lastspannung für das mindestens eine Peripheriemodul mit einer tatsächlich an dem mindestens einen Peripheriemodul (120, 122, 124, 126, 220, 222, 224) anliegenden Ist-Lastspannung ausgebildet ist,
**dadurch gekennzeichne**t,
dass das Spannungsversorgungsmodul (110, 210) zur Übertragung einer Lastspannungszustands-Information über eine Diskrepanz zwischen Soll- und Ist-Lastspannung an ein Steuerungsmodul (20) des modularen Peripheriesystems (10) oder des modularen Automatisierungssystems über den Rückwandbus (22) eingerichtet und ausgebildet ist.

2. Spannungsversorgungsmodul nach Anspruch 1,
**dadurch gekennzeichnet,**
**dass** das Spannungsversorgungsmodul (110, 210) derart ausgebildet und eingerichtet ist, dass die Lastspannungszustands-Information nur dann übertragen wird, wenn der Betrag der Diskrepanz zwischen Soll- und Ist-Lastspannung einen vorgegebenen oder vorgebbaren Grenzwert übersteigt.

3. Steuerungsmodul (20) für ein modulares Automatisierungssystem oder ein modulares Peripheriesystem (10) eines Automatisierungssystems, wobei das Steuerungsmodul (20)
- zum Empfang und/oder der Verarbeitung der Lastspannungszustands-Information gemäß Anspruch 1 oder 2 über den Rückwandbus (22), und
- zur Steuerung des mindestens einen Peripheriemoduls (120, 122, 124, 126, 220, 222, 224) gemäß Anspruch 1 oder 2 über den Rückwandbus (22) ausgebildet und eingerichtet ist.

4. Steuerungsmodul nach Anspruch 3,
**dadurch gekennzeichnet,**
**dass** das Steuerungsmodul (20) derart ausgebildet und eingerichtet ist, dass es über den Rückwandbus (22) eine Deaktivierung des mindestens einen Peripheriemoduls (120, 122, 124, 126, 220, 222, 224) auslöst,
- wenn eine Abweichung zwischen der Soll- und der Ist-Lastspannung von dem Spannungsversorgungsmodul (110, 210) an das Steuerungsmodul (20) übertragen wurde, und/oder
- wenn der Betrag der Diskrepanz zwischen der Soll- und der Ist-Lastspannung einen vorgegebenen oder vorgebbaren Grenzwert übersteigt.

5. Modulares Automatisierungssystem oder modulares Peripheriesystem für ein Automatisierungssystem, mit
- einem Spannungsversorgungsmodul (110, 210) gemäß Anspruch 1 oder 2,
- einem Steuerungsmodul (20) gemäß Anspruch 3 oder 4,
- mindestens einem Peripheriemodul (120, 122, 124, 126, 220, 222, 224) gemäß einem der Ansprüche 1 bis 4, sowie
- einem Rückwandbus (22) zur Kommunikation zwischen Spannungsversorgungsmodul (110, 210), Steuerungsmodul (20) und dem mindestens einen Peripheriemodul (120, 122, 124, 126, 220, 222, 224).

6. Modulares Automatisierungssystem oder modulares Peripheriesystem nach Anspruch 5,
**dadurch gekennzeichnet,**
**dass** das Spannungsversorgungsmodul (110, 210) und das mindestens eine Peripheriemodul (120, 122, 124, 126, 220, 222, 224) eine bezüglich der Lastspannung abgeschlossene Lastgruppe bilden.

7. Modulares Automatisierungssystem oder modulares Peripheriesystem nach einem der Ansprüche 5 oder 6,
**dadurch gekennzeichnet,**
**dass** das modulare Automatisierungssystem oder das modulare Peripheriesystem (10) mindestens eine Potentialschiene (116, 118, 216, 218), insbesondere mindestens eine selbstaufbauende Potentialschiene, zur die Versorgung des mindestens einen Peripheriemoduls (120, 122, 124, 126, 220, 222, 224) mit der Lastspannung durch das Spannungsversorgungsmodul (110, 210) umfasst.

8. Modulares Automatisierungssystem oder modulares Peripheriesystem nach einem der Ansprüche 5 bis 7,
**dadurch gekennzeichnet,**
**dass** das modulare Automatisierungssystem oder das modulare Peripheriesystem (10) mindestens einen Rückwandbus (22), insbesondere mindestens einen selbstaufbauenden Rückwandbus,
- zur Übertragung der Information über eine Abweichung zwischen Soll- und Ist-Lastspannung und/oder
- zur Übertragung einer Steuerinformation zur Deaktivierung des mindestens einen Peripheriemoduls (120, 122, 124, 126, 220, 222, 224) umfasst.

9. Modulares Automatisierungssystem oder modulares Peripheriesystem nach einem der Ansprüche 5 bis 8,
**dadurch gekennzeichnet,**
**dass** das Spannungsversorgungsmodul, das Steuerungsmodul und das mindestens eine Peripheriemodul mechanisch relativ zueinander fixiert oder fixierbar sind.

10. Verfahren zum Betrieb eines modularen Automatisierungssystems oder eines modularen Peripheriesystems (10) gemäß einem der Ansprüche 5 bis 9,
**dadurch gekennzeichnet, dass** das Spannungsversorgungsmodul (110, 210) eine Lastspannungszustands-Information über den Rückwandbus (22) zumindest dann an das Steuerungsmodul (20) sendet, wenn der Betrag der Diskrepanz zwischen der Soll- und der Ist-Lastspannung einen vorgegebenen oder vorgebbaren Grenzwert übersteigt.

11. Verfahren nach Anspruch 9,
**dadurch gekennzeichnet,**
**dass** das Steuerungsmodul (20) eine Deaktivierung des mindestens einen Peripheriemoduls (120, 122, 124, 126, 220, 222, 224) auslöst,
- wenn das Steuerungsmodul (20) eine Lastspannungszustands-Information erhalten hat, und/oder
- wenn der Betrag der Diskrepanz zwischen der Soll- und der Ist-Lastspannung einen vorgegebenen oder vorgebbaren Grenzwert übersteigt.

## Claims

1. Voltage supply module (110, 210) for a modular automation system or a modular peripheral system (10) of an automation system,
the voltage supply module (110, 210) being designed and set up to supply at least one peripheral module (120, 122, 124, 126, 220, 222, 224) with a load voltage,
the at least one peripheral module (120, 122, 124, 126, 220, 222, 224) being provided and set up to connect at least one external device (300), and
the modular automation system or the modular peripheral system comprising a backplane bus (22) for communication between modules of the modular automation system or the modular peripheral system (10), and
the voltage supply module (110, 210) being designed to compare a desired load voltage for the at least one peripheral module with an actual load voltage actually applied to the at least one peripheral module (120, 122, 124, 126, 220, 222, 224),
**characterized in that**
the voltage supply module (110, 210) is set up and designed to transmit an item of load voltage state information relating to a discrepancy between the desired load voltage and the actual load voltage to a control module (20) of the modular peripheral system (10) or of the modular automation system via the backplane bus (22).

2. Voltage supply module according to Claim 1,
**characterized in that**
the voltage supply module (110, 210) is designed and set up in such a manner that the load voltage state information is transmitted only when the magnitude of the discrepancy between the desired load voltage and the actual load voltage exceeds a predefined or predefinable limit value.

3. Control module (20) for a modular automation system or a modular peripheral system (10) of an automation system, the control module (20) being designed and set up
- to receive and/or process the load voltage state information according to Claim 1 or 2 via the backplane bus (22), and
- to control the at least one peripheral module (120, 122, 124, 126, 220, 222, 224) according to Claim 1 or 2 via the backplane bus (22).

4. Control module according to Claim 3,
**characterized in that**
the control module (20) is designed and set up in such a manner that it triggers deactivation of the at least one peripheral module (120, 122, 124, 126, 220, 222, 224) via the backplane bus (22)
- if a discrepancy between the desired load voltage and the actual load voltage has been transmitted from the voltage supply module (110, 210) to the control module (20), and/or
- if the magnitude of the discrepancy between the desired load voltage and the actual load voltage exceeds a predefined or predefinable limit value.

5. Modular automation system or modular peripheral system for an automation system, having
- a voltage supply module (110, 210) according to Claim 1 or 2,
- a control module (20) according to Claim 3 or 4,
- at least one peripheral module (120, 122, 124, 126, 220, 222, 224) according to one of Claims 1 to 4, and
- a backplane bus (22) for communication between the voltage supply module (110, 210), the control module (20) and the at least one peripheral module (120, 122, 124, 126, 220, 222, 224).

6. Modular automation system or modular peripheral system according to Claim 5,
**characterized in that**
the voltage supply module (110, 210) and the at least one peripheral module (120, 122, 124, 126, 220, 222, 224) form a load group which is closed with respect to the load voltage.

7. Modular automation system or modular peripheral system according to either of Claims 5 and 6,
**characterized in that**
the modular automation system or the modular peripheral system (10) comprises at least one busbar (116, 118, 216, 218), in particular at least one self-erecting busbar, for supplying the at least one peripheral module (120, 122, 124, 126, 220, 222, 224) with the load voltage by means of the voltage supply module (110, 210).

8. Modular automation system or modular peripheral system according to one of Claims 5 to 7,
**characterized in that**
the modular automation system or the modular peripheral system (10) comprises at least one backplane bus (22), in particular at least one self-erecting backplane bus,
- for transmitting the information relating to a discrepancy between the desired load voltage and the actual load voltage and/or
- for transmitting an item of control information for deactivating the at least one peripheral module (120, 122, 124, 126, 220, 222, 224).

9. Modular automation system or modular peripheral system according to one of Claims 5 to 8,
**characterized in that**
the voltage supply module, the control module and the at least one peripheral module are or can be mechanically fixed relative to one another.

10. Method for operating a modular automation system or a modular peripheral system (10) according to one of Claims 5 to 9,
**characterized in that** the voltage supply module (110, 210) sends an item of load voltage state information, via the backplane bus (22), to the control module (20) at least when the magnitude of the discrepancy between the desired load voltage and the actual load voltage exceeds a predefined or predefinable limit value.

11. Method according to Claim 9,
**characterized in that**
the control module (20) triggers deactivation of the at least one peripheral module (120, 122, 124, 126, 220, 222, 224)
- if the control module (20) has received an item of load voltage state information, and/or
- if the magnitude of the discrepancy between the desired load voltage and the actual load voltage exceeds a predefined or predefinable limit value.

## Revendications

1. Module d'alimentation en tension (110, 210) pour un système d'automatisation modulaire ou un système périphérique modulaire (10) d'un système d'automatisation,
- le module d'alimentation en tension (110, 210) qui sert à l'alimentation d'au moins un module périphérique (120, 122, 124, 126, 220, 222, 224) étant conçu et aménagé avec une tension de charge,
- l'au moins un module périphérique (120, 122, 124, 126, 220, 222, 224) étant prévu et aménagé pour le raccordement d'au moins un appareil externe (300) et
- le système d'automatisation modulaire ou le système périphérique modulaire comprenant un bus de paroi arrière (22) pour la communication entre des modules du système d'automatisation modulaire ou du système périphérique modulaire (10) et
- le module d'alimentation en tension (110, 210) étant réalisé pour comparer une tension de charge de consigne pour l'au moins un module périphérique à une tension de charge réelle effectivement appliquée à l'au moins un module périphérique (120, 122, 124, 126, 220, 222, 224),
**caractérisé en ce que**
le module d'alimentation en tension (110, 210) est aménagé et conçu pour transmettre une information sur l'état de la tension de charge, relative à un écart entre la tension de charge de consigne et la tension de charge réelle, à un module de commande (20) du système périphérique modulaire (10) ou du système d'automatisation modulaire via le bus de paroi arrière (22).

2. Module d'alimentation en tension selon la revendication 1, **caractérisé en ce que** le module d'alimentation en tension (110, 210) est conçu et aménagé de manière telle que l'information sur l'état de la tension de charge n'est transmise que si la valeur absolue de l'écart entre tension de charge de consigne et tension de charge réelle dépasse une valeur limite prédéterminée ou prédéterminable.

3. Module de commande (20) pour un système d'automatisation modulaire ou un système périphérique modulaire (10) d'un système d'automatisation, le module de commande (20) étant conçu et aménagé
- pour recevoir et/ou traiter l'information sur l'état de la tension de charge selon la revendication 1 ou 2 via le bus de paroi arrière (22) et
- pour commander l'au moins un module périphérique (120, 122, 124, 126, 220, 222, 224) selon la revendication 1 ou 2 via le bus de paroi arrière (22).

4. Module de commande selon la revendication 3, **caractérisé en ce que** le module de commande (20) est conçu et aménagé de manière telle qu'il déclenche, via le bus de paroi arrière (22), une désactivation de l'au moins un module périphérique (120, 122, 124, 126, 220, 222, 224)
- lorsqu'une différence entre la tension de charge de consigne et la tension de charge réelle a été transmise par le module d'alimentation en tension (110, 210) au module de commande (20) et/ou
- lorsque la valeur absolue de l'écart entre tension de charge de consigne et tension de charge réelle dépasse une valeur limite prédéterminée ou prédéterminable.

5. Système d'automatisation modulaire ou système périphérique modulaire pour un système d'automatisation, comportant :
- un module d'alimentation en tension (110, 210) selon la revendication 1 ou 2,
- un module de commande (20) selon la revendication 3 ou 4,
- au moins un module périphérique (120, 122, 124, 126, 220, 222, 224) selon l'une des revendications 1 à 4, et
- un bus de paroi arrière (22) pour la communication entre module d'alimentation en tension (110, 210), module de commande (20) et l'au moins un module périphérique (120, 122, 124, 126, 220, 222, 224).

6. Système d'automatisation modulaire ou système périphérique modulaire selon la revendication 5, **caractérisé en ce que** le module d'alimentation en tension (110, 210) et l'au moins un module périphérique (120, 122, 124, 126, 220, 222, 224) forment un groupe de charge fermé au regard de la tension de charge.

7. Système d'automatisation modulaire ou système périphérique modulaire selon l'une des revendications 5 ou 6, **caractérisé en ce que** le système d'automatisation modulaire ou le système périphérique modulaire (10) comprend au moins une barre de potentiel (116, 118, 216, 218), et plus particulièrement au moins une barre de potentiel qui se forme d'elle-même, pour l'alimentation de l'au moins un module périphérique (120, 122, 124, 126, 220, 222, 224) avec la tension de charge par le module d'alimentation en tension (110, 210).

8. Système d'automatisation modulaire ou système périphérique modulaire selon l'une des revendications 5 à 7, **caractérisé en ce que** le système d'automatisation modulaire ou le système périphérique modulaire (10) comprend au moins un bus de paroi arrière (22), et plus particulièrement au moins un bus de paroi arrière qui se forme de lui-même,
- pour transmettre l'information relative à un écart entre tension de charge de consigne et tension de charge réelle et/ou
- pour transmettre une information de commande pour désactiver l'au moins un module périphérique (120, 122, 124, 126, 220, 222, 224).

9. Système d'automatisation modulaire ou système périphérique modulaire selon l'une des revendications 5 à 8, **caractérisé en ce que** le module d'alimentation en tension, le module de commande et l'au moins un module périphérique sont fixés ou peuvent être fixés mécaniquement l'un relativement à l'autre.

10. Procédé de fonctionnement d'un système d'automatisation modulaire ou d'un système périphérique modulaire (10) selon l'une des revendications 5 à 9, **caractérisé en ce que** le module d'alimentation en tension (110, 210) envoie une information sur l'état de la tension de charge via le bus de paroi arrière (22) au module de commande (20) au moins lorsque la valeur absolue de l'écart entre tension de charge de consigne et tension de charge réelle dépasse une valeur limite prédéterminée ou prédéterminable.

11. Procédé selon la revendication 9, **caractérisé en ce que** le module de commande (20) déclenche une désactivation de l'au moins un module périphérique (120, 122, 124, 126, 220, 222, 224)
- lorsque le module de commande (20) a reçu une information sur l'état de la tension de charge et/ou
- lorsque la valeur absolue de l'écart entre tension de charge de consigne et tension de charge réelle dépasse une valeur limite prédéterminée ou prédéterminable.
